# EUROPÄISCHE PATENTANMELDUNG

(11) **EP 3 252 404 A1**
(43) Veröffentlichungstag der Anmeldung: **06.12.2017**
(21) Anmeldenummer: 17172812.4
(22) Anmeldetag: 24.05.2017
(51) Int. Cl.: F25D 23/02, C10B 25/02, F24C 15/02

(54) **TÜR MIT SPEZIFISCHER JUSTAGEVORRICHTUNG ZUM JUSTIEREN EINER FRONTPLATTE UND EINEM TRÄGER DER TÜR SOWIE HAUSHALTSGERÄT UND VERFAHREN ZUR JUSTAGE**

(30) Priorität: 03.06.2016 ES 201630748
(71) Anmelder: BSH Hausgeräte GmbH, 81739 München (DE)
(72) Erfinder: Esteban Corton, Luis Antonio, 50007 Zaragoza (ES); Hernandez Lopez, Francisco, 50015 Zaragoza (ES); Jorquera Cocera, Jose Manuel, 50002 Zaragoza (ES); Soguero Escuer, Joaquin, 50002 Zaragoza (ES)

(57) **Zusammenfassung**

Die Erfindung betrifft eine Tür (6) für ein Haushaltsgerät (1) mit einer Frontplatte (7) und einem Träger, an welchem die Frontplatte (7) angeordnet ist, wobei der Träger ein zumindest dreiseitiger Rahmen (10) ist, an dem die Frontplatte (7) angeordnet ist, und die Tür (6) eine an der Tür (6) angeordnete Justagevorrichtung (21) aufweist, mit welcher die Frontplatte (7) relativ zum Rahmen (10) in der Position verstellbar ist. Die Erfindung betrifft auch ein Haushaltsgerät und ein Verfahren zum Justieren einer Frontplatte (7) einer Tür (6).

## Beschreibung

Die Erfindung betrifft eine Tür für ein Haushaltsgerät mit einer Frontplatte und einem Träger, an welchem die Frontplatte angeordnet ist. Des Weiteren betrifft die Erfindung auch ein Haushaltsgerät mit einer derartigen Tür sowie ein Verfahren zum Justieren einer Frontplatte relativ zu einem Träger einer Tür eines Haushaltsgeräts.

Bei einem Haushaltsgerät, beispielsweise einem Backofen, ist es bekannt, dass eine frontseitige Tür vorhanden ist, die an einem Gehäuse schwenkbar angeordnet ist. In dem Gehäuse ist ein Garraum ausgebildet, der durch die Tür frontseitig verschlossen wird. Üblicherweise ist auch noch eine Gehäusefront vorhanden, die insbesondere oberhalb der Frontplatte der Tür, im geschlossenen Zustand der Tür, angeordnet ist. Diese Gehäusefront kann beispielsweise eine Bedienblende sein und ist ortsfest an dem Gehäuse angeordnet. Die Tür ist üblicherweise über Scharniere an dem Gehäuse angeordnet. Aufgrund des Aufbaus der Türen mit einer Frontplatte und einem Träger können durch Montagetoleranzen und/oder Fertigungstoleranzen, aber auch jedoch durch im dauerhaften Betrieb und somit bei mehrmaligem Öffnen und Schließen der Tür Dejustagen der Position der Frontplatte auftreten. Dadurch tritt im geschlossenen Zustand der Tür ein frontseitiges Erscheinungsbild auf, bei welchem diese Frontplatte der Tür nicht mehr quasi in Flucht und somit parallel zu dieser Frontseite des Gehäuses vorliegt. Ein derartiges Verkipptsein oder Verschobensein der Frontplatte kann zu einem nicht vollständigen Schließen der Tür führen. Ebenso ist dann möglich, dass bei relativ großer Verkippung die Frontplatte beim Schließen an der Frontseite des Gehäuses anstößt und dadurch entsprechend Beschädigungen auftreten können. Nicht zuletzt ist durch diese Dejustage auch ein optisch nachteiliges Erscheinungsbild vorliegend. Nicht zuletzt ist durch eine derartige unerwünschte Position zwischen der Frontplatte und dem Träger auch der gesamte positionelle Aufbau der Tür beeinträchtigt und die nicht mehr geradlinige Ausrichtung zwischen der Frontplatte und dem Träger kann auch zu unerwünschten einseitigen Gewichtsbelastungen von weiteren Komponenten führen, beispielsweise der Scharniere. Dadurch kann eine einseitige Belastung individueller Komponenten der Tür auf Dauer auch zu einer Funktionsbeeinträchtigung dieser Komponenten führen.

Aus der DE 34 25 991 C1 ist ein Einbaugerät für eine Nische von Küchenmöbeln bekannt. Dort wird eine Gerätetür eines Haushaltsgeräts mit einer dazu separaten Platte, nämlich einem Türblatt, verbunden. Die beiden plattenförmigen Teile können dabei auch durch eine sehr komplexe und an vier Stellen, insbesondere in Eckbereichen der jeweiligen Platten, ausgebildete Justagevorrichtung relativ zueinander eingestellt werden. Diese Ausgestaltung ist relativ komplex und fehleranfällig.

Es ist Aufgabe der vorliegenden Erfindung, sowohl eine Tür für ein Haushaltsgerät, ein entsprechendes Haushaltsgerät als auch ein Verfahren zur Justage einer Frontplatte an einem Träger der Tür bereitzustellen, bei welchem eine Positionseinstellung zwischen der Frontplatte und dem Träger einfach und genau erfolgen kann.

Diese Aufgabe wird durch eine Tür, ein Haushaltsgerät und ein Verfahren gemäß den unabhängigen Ansprüchen gelöst.

Eine erfindungsgemäße Tür für ein Haushaltsgerät umfasst eine Frontplatte und einen Träger, an welchem die Frontplatte angeordnet ist. Der Träger ist insbesondere ein zumindest dreiseitiger Rahmen. Die daran angeordnete Frontplatte ist relativ zum Rahmen verstellbar. Dies erfolgt insbesondere mit einer vorzugsweise vollständig an der Tür angeordneten Justagevorrichtung, mit welcher diese Position der Frontplatte relativ zum Rahmen verstellbar ist.

Insbesondere ist bei einer erfindungsgemäßen Ausführung der Tür für ein Haushaltsgerät vorgesehen, dass die Tür eine Frontplatte und einen Träger aufweist, an welchem die Frontplatte angeordnet ist. Der Träger ist ein zumindest dreiseitiger Rahmen, an dem die Frontplatte angeordnet ist und mit einer an der Tür angeordneten Justagevorrichtung in der Position relativ zum Rahmen verstellbar ist. Durch diese Ausgestaltung, bei welcher die Justagevorrichtung an zumindest einem insbesondere vertikalen Rahmenteil des zumindest dreiseitigen Rahmens angeordnet ist, insbesondere an zwei gegenüberliegenden vertikalen Rahmenteilen dieses zumindest dreiseitigen Rahmens angeordnet ist, wird einerseits der Träger sehr einfach und platzsparend sowie gewichtsreduziert ausgebildet. Andererseits ist durch diese spezifische Ausgestaltung der Justagevorrichtung eine sehr einfache und dennoch genaue Positionsverstellung zwischen der Frontplatte und diesem geometrisch spezifizierten Träger, nämlich dem zumindest dreiseitigen Rahmen, gegeben.

Durch die bevorzugte Ausgestaltung der Justagevorrichtung an zwei eigenen Rahmenteilen, nämlich an gegenüberliegenden vertikalen Rahmenteilen, lässt sich die Justage sehr feinjustiert und somit wegedosiert einstellen. Darüber hinaus ist die Einstellung auch sehr einfach möglich.

Insbesondere sind nur an den beiden Rahmenteilen Elemente der Justagevorrichtung vorhanden, so dass die Justagevorrichtung nur an zwei Stellen ausgebildet ist, wobei die einfache Handhabbarkeit der Einstellung nochmals verbessert ist.

Durch diese exponierte Stellung der Justagevorrichtung kann diese auch entsprechend exponiert dargestellt sein, sodass die Zugänglichkeit zur Justage einfach möglich ist. Dennoch ist die Justagevorrichtung sehr klein und kompakt aufgebaut, und in dem Zusammenhang kann sie auch entsprechend versteckt positioniert werden.

Insbesondere ist vorgesehen, dass die Frontplatte durch die Justagevorrichtung um eine senkrecht zur Frontplatte stehende Achse relativ zum Rahmen verdrehbar ist. Die derartige Rotationsbewegung der Frontplatte ermöglicht somit ein entsprechendes Ausrichten, sodass eine verkippte Position der Frontplatte in einer horizontalen Ebene ausgeglichen werden kann. Dadurch wird nicht nur der in einer ebenfalls horizontalen Ebene angeordnete zumindest dreiseitige Rahmen mit der Frontplatte entsprechend parallel ausgerichtet, sondern es wird dann auch zugleich eine sichtseitige und somit das vordere Bauteil der die Tür darstellende Frontplatte horizontal gestellt und somit auch zu einer Frontseite des Gehäuses, insbesondere zu einer Bedienblende, entsprechend ausgerichtet.

Besonders vorteilhaft ist es, dass die Justagevorrichtung zur horizontalen gradlinigen Verschiebung der Frontplatte relativ zum Rahmen ausgebildet ist. Die oben genannten Vorteile gelten hier entsprechend.

In einer vorteilhaften Ausführung ist der Rahmen als vierseitiger, umlaufend geschlossener Rahmen ausgebildet. Der Rahmen ist somit viereckig gestaltet. Durch diese Ausgestaltung weist er erhöhte Stabilität auf und er kann somit zur Aufnahme und zum Tragen entsprechender Komponenten bereitgestellt werden. Darüber hinaus ist er durch eine derartige umseitig geschlossene Ausführung in sich auch verwindungssteifer, sodass auch eine relativ schwere Frontplatte daran problemlos befestigt werden kann und auch noch gegebenenfalls weitere Platten, beispielsweise eine Zwischenscheibe und/oder eine Innenscheibe einer entsprechenden Tür befestigt werden können.

Es ist in einer vorteilhaften Ausführung vorgesehen, dass diese Frontplatte eine Glasplatte ist oder zumindest bereichsweise aus Glas ausgebildet ist.

Vorzugsweise ist vorgesehen, dass die Justagevorrichtung eine erste Justageschraube aufweist, die mit ihrer Längsachse parallel zur Frontplatte orientiert ist und in einer horizontalen Richtung durch eine Schraubbewegung bewegbar ist. Diese örtliche Anordnung und diese entsprechende Orientierung der ersten Justageschraube ermöglicht deren einfache Handhabung und präzise Verstellmöglichkeit. Es ist somit nicht erforderlich, dass senkrecht zur Ebene der Frontplatte ein entsprechend dimensionierter Aufbau vorhanden ist, der mit einer dann mit seiner Längsachse senkrecht zur Ebene der Frontplatte orientierten Verstellschraube entsprechend groß zu dimensionieren ist. Bei der bevorzugten erfindungsgemäßen Ausgestaltung, wie sie oben dargelegt wurde, ist der in Tiefenrichtung und somit senkrecht zur Ebene der Frontplatte bemessene Bauraum für diese erste Justageschraube minimiert.

In einer vorteilhaften Ausführung ist vorgesehen, dass die erste Justageschraube an dem Rahmen angeordnet ist und mit einem Gewinde an einem Schraubenstift der ersten Justageschraube mit einem Gegengewinde eines ersten Koppelelements, welches an einer Rückseite der Frontplatte angeordnet ist, schraubgekoppelt ist. Damit lässt sich durch eine Schraubenbewegung und somit ein Drehen der ersten Justageschraube die Eindringtiefe der ersten Justageschraube in das erste Koppelelement definiert einstellen. Insbesondere ist diese erste Justageschraube an einem ersten vertikalen Rahmenteil des zumindest dreiseitigen Rahmens ausgebildet und damit gewindegekoppelt.

In bevorzugter Ausführung ist vorgesehen, dass bei der ersten Justageschraube diese ohne direkte Gewindekopplung an dem Rahmen gelagert ist. Es ist somit keine Gewindeverschraubung zwischen einem Gewinde an dem Schraubenstift und einem Gewinde an dem Rahmen vorgesehen. Der Rahmen, insbesondere dieses vertikale Rahmenteil, an dem diese erste Justageschraube gelagert ist, weist somit im Durchsteckbereich, durch welchen sich der Schraubenstift der ersten Justageschraube durch den Rahmen hindurch erstreckt, kein Gewinde auf. Da dieses erste Koppelelement ortsfest mit der Frontplatte verbunden ist, ändert sich somit die entsprechende Relativposition der Frontplatte zu dem Rahmen.

Bei einer weiteren vorteilhaften Ausführung ist vorgesehen, dass sich die erste Justageschraube mit dem Schraubenstift durch ein Loch bzw. Durchsteckbereich in einem senkrechten Rahmenteil des Rahmens erstreckt.

Insbesondere ist vorgesehen, dass das erste Koppelelement von der Rückseite der Frontplatte mit einem Plattenteil nach hinten absteht, insbesondere senkrecht dazu nach hinten absteht. Dadurch wird in Breitenrichtung ein sehr flachbauendes Bauteil des Koppelelements bereitgestellt, mit dem jedoch eine entsprechende Kopplung mit der ersten Justageschraube einfach möglich ist.

Insbesondere weist dieses Plattenteil eine Gewindewarze auf, in welcher dieses Gewinde des Koppelelements ausgebildet ist.

In einer vorteilhaften Ausführung ist vorgesehen, dass die Justagevorrichtung eine zweite Justageschraube aufweist, die mit ihrer Längsachse parallel zur Frontplatte orientiert ist und in einer horizontalen Richtung (Breitenrichtung) durch eine Schraubbewegung bewegbar ist. Auch hier gelten die Vorteile, wie sei bereits oben bei der vorteilhaften Ausführung mit der entsprechenden Orientierung der ersten Justageschraube genannt wurden.

In vorteilhafter Weise ist diese zweite Justageschraube an einem vertikalen Rahmenteil des Rahmens angeordnet, jedoch an einem anderen vertikalen Rahmenteil, an dem vorzugsweise die erste Justageschraube angeordnet ist. Insbesondere sind die beiden Justageschrauben an jeweils separaten, gegenüberliegenden und vorzugsweise parallel zueinander verlaufenden vertikalen Rahmenteilen angeordnet. Sie sind mit ihren Schraubenstiften vorzugsweise einander zugewandt angeordnet.

Vorzugsweise ist vorgesehen, dass die zweite Justageschraube an dem Rahmen angeordnet ist und mit einem Gewinde an einem Schraubenstift der zweiten Justageschraube mit einem Gegengewinde im Rahmen schraubgekoppelt ist. Bei dieser zweiten Justageschraube ist somit vorgesehen, dass eine explizite Gewindekopplung mit dem Rahmenteil selbst vorhanden ist. Es ist insbesondere vorgesehen, dass keine Gewindekopplung dieser zweiten Justageschraube und somit deren Schraubenstift mit der Frontplatte ausgebildet ist.

Durch diese Gewindekopplung zwischen der zweiten Justageschraube und dem Rahmenteil kann die Eintauchtiefe des Schraubenstifts der zweiten Justageschraube in dieses Rahmenteil individuell eingestellt werden. Damit wird auch die relative Position dieser zweiten Justageschraube zu diesem Rahmenteil geändert, wodurch sich dann auch aufgrund der Kopplung dieser zweiten Justageschraube, insbesondere über ein zweites Koppelelement, mit der Frontplatte entsprechend die relative Positionsverstellung der Frontplatte zu dem Rahmen ergibt.

Vorzugsweise ist vorgesehen, dass ein Schraubenstift der zweiten Justageschraube an seinem vorderen Endbereich eine Eingriffsnut aufweist, in welcher ein zweites Koppelelement, welches an einer Rückseite der Frontplatte angeordnet ist, eingreift. Insbesondere ist vorgesehen, dass diese Eingriffsnut eine Radialnut ist, welche zumindest bereichsweise umlaufend um eine Längsachse des Schraubenstifts an dem Schraubenstift ausgebildet ist. Diese Radialnut ist über ihre gesamte azimutale Umlauflänge an einem gleichen Axialabschnitt entlang der Längsachse des Schraubenstifts betrachtet ausgebildet. Diese Eingriffsnut ist somit keine Spiralbahn beziehungsweise Helixbahn.

Durch eine derartige einfache Kopplung des Schraubenstifts mit dem Koppelelement kann die präzise Bewegungsführung erreicht werden und eine sehr feinjustierte Relativbewegung zwischen der Frontplatte und dem Rahmen eingestellt werden.

Wie bereits erläutert, ist vorgesehen, dass die zweite Justageschraube keine Gewindekopplung mit der Frontplatte und somit auch nicht mit diesem zweiten Koppelelement aufweist.

Vorzugsweise ist vorgesehen, dass das zweite Koppelelement ein von der Rückseite nach hinten abstehendes Plattenteil aufweist, welches mit der Eingriffsnut verbunden ist. Auch hier ist vorgesehen, dass das Plattenteil vorzugsweise senkrecht zur Ebene der Frontplatte von der Rückseite nach hinten abstehend ausgebildet ist.

Insbesondere ist vorgesehen, dass das Plattenteil eine zur Randseite des Plattenteils offene Eingriffskulisse aufweist, in welche der Schraubenstift eintaucht und ein Begrenzungsrand der Eingriffskulisse in die Eingriffsnut eingreift. In vorteilhafter Weise wird durch dieses Konzept der beiden Justageschrauben, insbesondere durch deren individuelle Anordnung und insbesondere durch deren jeweilige individuelle Kopplung mit dem Rahmenteil und den Koppelelementen, vorzugsweise durch die individuellen Gewindekopplungen und Nichtgewindekopplungen, die Möglichkeit geschaffen, dass die Frontplatte sowohl in geradliniger horizontaler Richtung und somit in Breitenrichtung der Tür zum Träger verschoben werden kann und/oder eine Rotationsbewegung um eine Achse senkrecht zur Ebene der Frontplatte verdreht werden kann. Dadurch können Horizontalverschiebungen in geradliniger Bewegung als auch Drehbewegungen und somit Verkippungen erreicht werden und entsprechende positionelle Dejustagen ausgeglichen werden.

Insbesondere ist vorgesehen, dass die Eingriffskulisse nicht-geradlinig ausgebildet ist, vorzugsweise L-förmig ausgebildet ist. Dadurch kann ein entsprechend sicheres Eingreifen und Koppeln mit der Eingriffsnut erreicht werden. Insbesondere sind dadurch auch entsprechende Höhenveränderungen bei einer Kippbewegung der Frontplatte und somit bei einer Rotationsbewegung zur Einstellung der Justage möglich und ausgleichbar.

Vorzugsweise ist vorgesehen, dass der Schraubenstift der zweiten Justageschraube parallel oder koaxial zur Orientierung des Schraubenstifts der ersten Justageschraube angeordnet ist. Das Justageszenario insbesondere bezüglich der oben genannten Möglichkeiten ist dadurch nochmals einfacher und bezüglich der sehr feinjustierten Positionsveränderung gegeben.
Insbesondere ist vorgesehen, dass die erste Justageschraube und/oder die zweite Justageschraube in einer oberen Höhenhälfte der Frontplatte und des Rahmens angeordnet sind, insbesondere in einem oberen Höhendrittel ausgebildet sind.

Vorzugsweise ist vorgesehen, dass in einem unteren Bereich, insbesondere in einer unteren Höhenhälfte der Frontplatte, zwei separate Haltehaken angeordnet sind. Mit diesen Haltehaken ist der Rahmen zusätzlich verbunden. Insbesondere kann vorgesehen sein, dass diese Haltehaken mit den jeweilig gegenüberliegenden vertikalen Rahmenteilen und/oder mit einem unteren horizontalen Rahmenteil, durch welches die beiden vertikalen Rahmenteile verbunden sind, angeordnet sind. Durch diese Haltehaken wird eine weitere Befestigung und Halterung der Frontplatte an dem Rahmen erreicht.

In vorteilhafter Weise ist vorgesehen, dass der Rahmen mit Scharnieren verbunden ist, mittels welchen die Tür schwenkbar um eine Schwenkachse an einem Gehäuse des Haushaltsgeräts angeordnet ist.

Des Weiteren betrifft die Erfindung auch ein Haushaltsgerät, insbesondere ein Gargerät, wie einen Backofen, welches ein Gehäuse und eine Tür gemäß der Erfindung oder einer vorteilhaften Ausgestaltung davon aufweist. Die Tür ist bewegbar an dem Gehäuse angeordnet und insbesondere zum Verschließen eines Aufnahmeraums, der in dem Gehäuse ausgebildet ist, angeordnet. Der Aufnahmeraum ist insbesondere ein Garraum.

Des Weiteren betrifft die Erfindung auch ein Verfahren zur Justage einer Tür eines Haushaltsgeräts. Es wird eine an einem als zumindest dreiseitiger Rahmen ausgebildeten Träger der Tür angeordnete Frontplatte relativ zu diesem Träger positionell justiert, wobei die Justage mit einer an der Tür angeordneten Justagevorrichtung durchgeführt wird und die Justagevorrichtung an zumindest einem vertikalen Rahmenteil des zumindest dreiseitigen Rahmens angeordnet wird.

Die dadurch erreichbaren Vorteile wurden bereits oben zur Tür erläutert.

Vorteilhafte Ausführungen der erfindungsgemäßen Tür sind als vorteilhafte Ausführungen des erfindungsgemäßen Verfahrens anzusehen. Dabei ist insbesondere die gegenständliche Ausgestaltung der Tür mit den Rahmenteilen und/oder der Frontplatte und/oder der Justagevorrichtung dazu ausgebildet, die individuellen Justageschritte durchzuführen.

Mit Angaben "oben", "unten", "vorne", "hinten, "horizontal", "vertikal", "Tiefenrichtung", "Breitenrichtung", "Höhenrichtung" etc. sind die bei bestimmungsgemäßen Gebrauch und bestimmungsgemäßem Anordnen der Tür und des Geräts und bei einem dann vor der Tür und dem Gerät stehenden und in Richtung der Tür und dem Gerät blickenden Beobachter gegebenen Positionen und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Ausführungsbeispiele der Erfindung werden nachfolgend anhand schematischer Zeichnungen näher erläutert. Es zeigen:
- Fig. 1: eine frontseitige Ansicht auf ein Ausführungsbeispiel eines erfindungsgemäßen Haushaltsgeräts mit noch dejustierter Frontplatte einer Tür des Haushaltsgeräts;
- Fig. 2: eine transparente Ansicht auf Komponenten der Tür, wie sie in Fig. 1 des Haushaltsgeräts verbaut ist;
- Fig. 3: eine perspektivische Darstellung eines Ausführungsbeispiels eines als Rahmen ausgebildeten Trägers der Tür;
- Fig. 4: eine perspektivische Darstellung einer Frontplatte mit entsprechenden Koppelelementen und Haltehaken;
- Fig. 5: eine vergrößerte Darstellung eines Teilbereichs eines Rahmenteils des Rahmens gemäß Fig. 3 mit einer beispielhaften Darstellung einer zweiten Justageschraube einer Justagevorrichtung der Tür;
- Fig. 6: eine Darstellung der Komponenten gemäß Fig. 5 mit zusätzlichem zweiten Koppelelement, welches an einer Rückseite der Frontplatte angeordnet ist;
- Fig. 7: eine Horizontalschnittdarstellung durch die Anordnung gemäß Fig. 2 entlang der Schnittlinie VII-VII; und
- Fig. 8: eine Horizontalschnittdarstellung durch die Anordnung gemäß Fig. 2 entlang der Schnittline VIII-VIII.

In den Figuren werden gleiche oder funktionsgleiche Elemente mit den gleichen Bezugszeichen versehen.

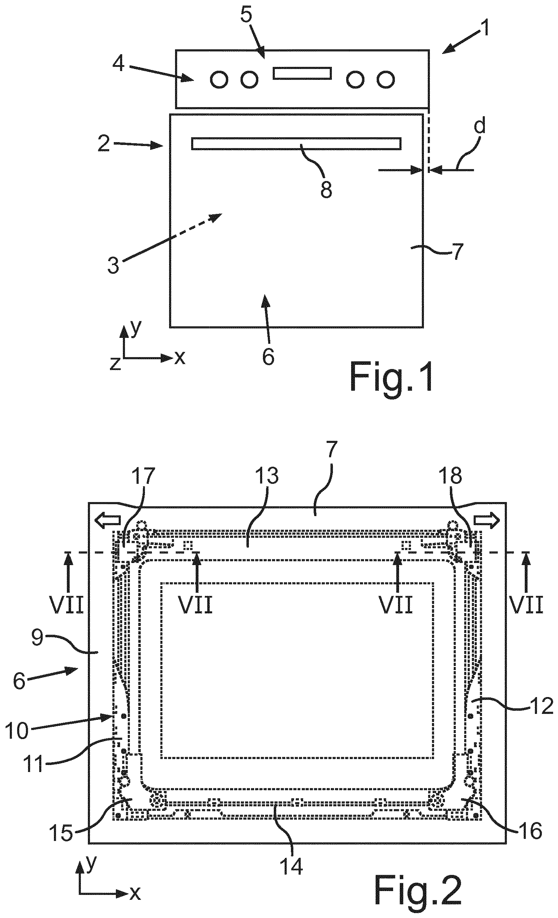

In Fig. 1 ist eine Frontansicht eines Ausführungsbeispiels eines erfindungsgemäßen Haushaltsgeräts zum Zubereiten von Lebensmitteln, insbesondere eines Gargeräts, wie beispielsweise eines Backofens 1, gezeigt. Der Backofen 1 umfasst ein Gehäuse 2, in dem ein ausgedehnter Garraum 3 ausgebildet ist. An dem Gehäuse 2 ist darüber hinaus auch noch eine Bedienblende 4 als beispielhafte Gehäusefront angeordnet, die lediglich beispielhaft eine Bedienvorrichtung 5 zeigt, die eine Anzeigeeinheit für Bedienelemente umfasst. Die Bedienblende 4 ist ein frontseitiges Sichtbauteil und im Ausführungsbeispiel oberhalb einer Tür 6 angeordnet. Die Tür 6 ist in Fig. 1 im geschlossenen Zustand gezeigt und sie ist zum Verschließen des Garraums 3 ausgebildet. Die Tür 6 umfasst eine Frontplatte 7, die im Ausführungsbeispiel vollständig eine Glasscheibe ist und ein frontseitig sichtbares Bauteil ist. An einer Vorderseite ist ein beispielhafter Griff 8 gezeigt. In Fig. 1 ist zur Verdeutlichung der Erfindung diese Frontplatte 7 in Breitenrichtung (x-Richtung) und somit in horizontaler Richtung verschoben und somit mit in einem Versatz d zur Bedienblende 4 angeordnet.

Im nachfolgend erläuterten Ausführungsbeispiel ist dieser Versatz d kompensierbar beziehungsweise ausgleichbar, sodass dann die Frontplatte 7 in vertikaler Richtung und somit in Höhenrichtung (y-Richtung) fluchtend mit der Bedienblende 4 angeordnet ist.

In Fig. 2 sind Komponenten der Tür 6 gezeigt, wobei hier von vorne auf die Tür 6 geblickt wird. Wie zu erkennen ist, ist dabei an einer Innenseite bzw. Rückseite 9 der Frontplatte 7, welche Rückseite 9 im geschlossenen Zustand der Tür 6 dem Garraum 3 zugewandt ist, ein Träger in Form eines insbesondere zumindest dreiseitigen Rahmens 10, im Ausführungsbeispiel eines vierseitigen und umlaufend geschlossenen Rahmens 10, angeordnet. Der Rahmen 10 umfasst ein erstes vertikales Rahmenteil 11, ein gegenüberliegendes zweites vertikales Rahmenteil 12 sowie ein oberes horizontales Rahmenteil 13 und ein unteres horizontales Rahmenteil 14.

Bei der in Fig. 2 gezeigten transparenten Frontansicht der Tür 6 ist auch zu erkennen, dass in Höhenrichtung betrachtet in einem unteren Bereich, insbesondere in einer unteren Höhenhälfte der Frontplatte 7, insbesondere in einem unteren Höhendrittel der Frontplatte 7, an gegenüberliegenden Eckbereichen jeweils ein Haltehaken 15 und 16 angeordnet ist. Die Haltehaken 15 und 16 sind an der Rückseite 9 angeordnet, und der Rahmen 10 ist darin eingebracht, insbesondere eingehängt.

In einem oberen Bereich, insbesondere einer oberen Höhenhälfte, vorzugsweise einem oberen Höhendrittel, sind ebenfalls an gegenüberliegenden Eckbereichen Koppelelemente 17 und 18 angeordnet, die ebenfalls insbesondere an der Rückseite 9 befestigt sind. Die Koppelelemente 17 und 18 sind ortsfest an der Rückseite 9 befestigt.

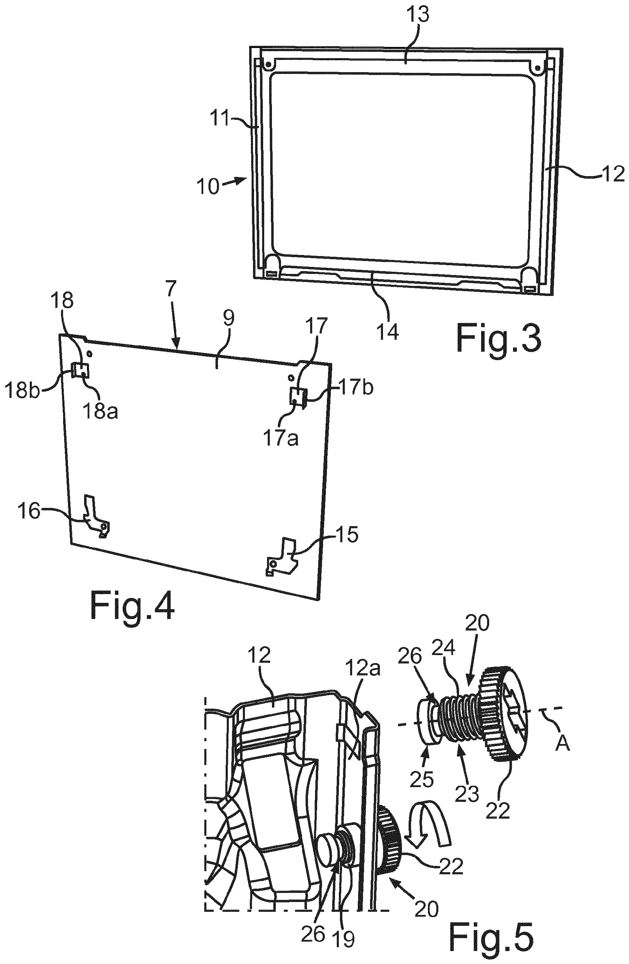

In Fig. 3 ist der Rahmen 10 nochmals gezeigt und in seinen Bestandteilen dargestellt.

Vorzugsweise ist der Rahmen 10 einstückig ausgebildet und somit die Rahmenteile 11 bis 14 entsprechend miteinander verbunden.

In Fig. 4 ist die Frontplatte 7 mit Blick auf die Rückseite 9 gezeigt. Die vorzugsweise L-förmigen Haltehaken 15 und 16 sind ebenso dargestellt, wie die Koppelelemente 17 und 18. Die L-Form der Haltehaken 15 und 16 ist dabei in einer Ebene betrachtet, die parallel zur Ebene der Frontplatte 7 orientiert ist. Die Koppelelemente 17 und 18 hingegen sind L-förmig gestaltet, jedoch in einer Ebene, die senkrecht zur Ebene der Frontplatte 7 orientiert ist und horizontal aufgespannt ist. Dadurch weist das erste Koppelelement 17 ein erstes Plattenteil 17a auf, welches an der Rückseite 9 angeordnet ist. Ein dazu insbesondere in einem Winkel von 90° nach hinten abstehendes weiteres Plattenteil 17b ist umfasst. Entsprechend weist das zweite Koppelelement 18 ein Plattenteil 18a auf, welches an der Rückseite 9 angeordnet ist. Ein ebenfalls dazu insbesondere im Winkel von 90° nach hinten abstehendes weiteres Plattenteil 18b ist vorgesehen.

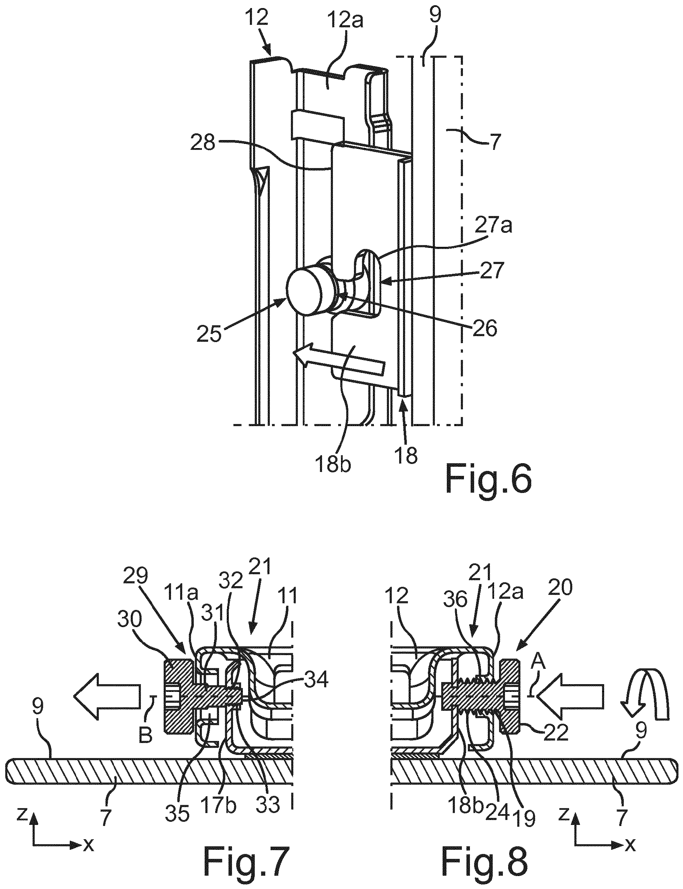

In Fig. 5 ist in einer vergrößerten Teildarstellung das Rahmenteil 12 im oberen Bereich gezeigt. Es ist hier eine gewisse gebogene Geometrie gestaltet, sodass eine in Tiefenrichtung und somit senkrecht zur Ebene der Frontplatte 7 nach hinten stehende Rahmenteilwand 12a eine Durchführung 19 aufweist, durch welche eine zweite Justageschraube 20 einer Justagevorrichtung 21 (Fig. 7 und Fig. 8) einschraubbar ist. Wie in dem Zusammenhang zu erkennen ist, weist die zweite Justageschraube 20, wie sie in Fig. 5 rechts auch nochmals separat dargestellt ist, einen Schraubenkopf 22 und einen daran anschließenden Schraubenstift 23 auf. Der Schraubenstift 23 weist entlang einer Längsachse A der Justageschraube 20 bereichsweise ein Gewinde 24 auf. An einem vorderen Ende 25, welches dem Schraubenkopf 22 abgewandt ist, ist auch noch eine Eingriffsnut 26 ausgebildet, insbesondere in axialem Anschluss an das Gewinde 24.

Wie ihn der linken Darstellung in Fig. 5 gezeigt ist, bei welcher die zweite Justageschraube 20 in der Durchführung 19 verbracht ist, ist diese zweite Justageschraube 20 mit diesem Gewinde 24 mit einem Gegengewinde an der Innenseite der Durchführung 19 schraubgekoppelt. Das vordere Ende 25 mit der Eingriffsnut 26 hingegen ist durch die Durchführung 19 hindurchgeführt.

In Fig. 6 ist ein Zustand gezeigt, bei welchem dann das zweite Koppelelement 18 mit der zweiten Justageschraube 20 gekoppelt wird. In dieser Ausgestaltung ist vorgesehen, dass in dem Plattenteil 18b eine Eingriffskulisse 27 ausgebildet ist, die zu einem dem Plattenteil 18a abgewandten Rand 28 des Plattenteils 18b offen ausgebildet ist. Die Eingriffskulisse 27 ist nicht-geradlinig, insbesondere L-förmig. Im verbundenen Zustand greift ein Begrenzungsrand 27a der Eingriffskulisse 27 in die Eingriffsnut 26 ein.

In Fig. 7 und Fig. 8 ist ein Horizontalschnitt und somit ein Schnitt in der x-z-Ebene gezeigt. Hier ist in Fig. 7 ein Schnitt an der Schnittlinie VII-VII in Fig. 2 gezeigt, wohingegen in Fig. 8 ein Schnitt entlang der Schnittline VIII-VIII in Fig. 2 gezeigt ist. Wie dazu in Fig. 7 zu erkennen ist, umfasst die Justagevorrichtung 21 eine erste Justageschraube 29, die einen Schraubenkopf 30 und einen Schraubenstift 31 aufweist. Auch hier ist der Schraubenstift 31 bereichsweise, insbesondere an seinem vorderen Ende, mit einem Gewinde 32 ausgebildet. Wie zu erkennen ist, ist dieses Gewinde 32 mit einem Gegengewinde 33, welches in einer Durchführung 34 in dem Plattenteil 17b ausgebildet ist, gewindegekoppelt beziehungsweise schraubgekoppelt. Wie zu erkennen ist, erstreckt sich die erste Justageschraube 29 in horizontaler Richtung und somit in Breitenrichtung beziehungsweise in x-Richtung. Der Schraubenstift 31 ist somit parallel zur Frontplatte 7 orientiert. Entsprechend ist auch die zweite Justageschraube 20 orientiert. Im montierten Zustand sind die beiden Justageschrauben 20 und 29 so angeordnet, dass ihre Schraubenstifte 23 und 31 einander zugewandt orientiert sind.

Wie darüber hinaus in Fig. 7 gezeigt ist, ist in einer Rahmenteilwand 11a des Rahmenteils 11 eine Durchführung 35 ausgebildet, durch welche sich der Schraubenstift 31 erstreckt. Die erste Justageschraube 29 und somit auch der Schraubenstift 31 sind jedoch nicht gewindegekoppelt und somit nicht schraubgekoppelt mit diesem Rahmenteil 11 und somit auch nicht mit der Rahmenteilwand 11a. Eine Schraubkopplung und somit eine Gewindekopplung ist nur mit der Wand beziehungsweise dem Plattenteil 17b des ersten Koppelelements 17 ausgebildet.

Demgegenüber ist zu erkennen, dass die zweite Justageschraube 20 nur mit dem Rahmenteil 12 und somit insbesondere der Rahmenteilwand 12a schraubgekoppelt beziehungsweise gewindegekoppelt ist und wobei hier ein Gegengewinde 36 an der Innenseite der Durchführung 19 gezeigt ist, mit welchem das Gewinde 24 des Schraubenstifts 23 gekoppelt ist.

Zur zumindest Horizontalverschiebung der Frontplatte 7 und somit zum Ausgleichen vom in Fig. 1 beispielhaft dargestellten horizontalen Versatz d der Frontplatte 7 zum Rahmen 10 und somit auch zur Bedienlende 4 wird insbesondere die zweite Justageschraube 20 entsprechend verdreht, wobei dazu vorzugsweise die erste Justageschraube 29 gelockert ist, was bedeutet, dass die erste Justageschraube 29 mit ihrem Schraubenkopf 30 nicht an der Außenseite des Rahmenteils 11 beziehungsweise der Rahmenteilwand 11a fest anliegt. Insbesondere ist dann vorgesehen, wenn der Versatz d durch entsprechende Einstellung der zweiten Justageschraube 20 ausgeglichen ist, dass dann auch die erste Justageschraube 29 festgezogen wird, was bedeutet, dass die erste Justageschraube 29 in das erste Koppelelement 17 eingedreht wird, bis der Schraubenkopf 30 fest an der Außenseite der Rahmenteilwand 11 a anliegt. Dadurch ist die justierte Position der Frontplatte 7 fixiert.

### Bezugszeichenliste

- 1: Backofen
- 2: Gehäuse
- 3: Garraum
- 4: Bedienblende
- 5: Bedienvorrichtung
- 6: Tür
- 7: Frontplatte
- 8: Griff
- 9: Rückseite
- 10: Rahmen
- 11: erstes vertikales Rahmenteil
- 11a: Rahmenteilwand
- 12: zweites vertikales Rahmenteil
- 12a: Rahmenteilwand
- 13: oberes horizontales Rahmenteil
- 14: unteres horizontales Rahmenteil
- 15: Haltehaken
- 16: Haltehaken
- 17: Koppelelement
- 17a: Plattenteil
- 17b: Plattenteil
- 18: Koppelelement
- 18a: Plattenteil
- 18b: Plattenteil
- 19: Durchführung
- 20: zweite Justageschraube
- 21: Justagevorrichtung
- 22: Schraubenkopf
- 23: Schraubenstift
- 24: Gewinde
- 25: vorderes Ende
- 26: Eingriffsmulde
- 27: Eingriffskulisse
- 27a: Begrenzungsrand
- 28: Rand
- 29: erste Justageschraube
- 30: Schraubenkopf
- 31: Schraubenstift
- 32: Gewinde
- 33: Gegengewinde
- 34: Durchführung
- 35: Durchführung
- 36: Gegengewinde
- d: Versatz
- A: Längsachse

## Patentansprüche

1. Tür (6) für ein Haushaltsgerät (1) mit einer Frontplatte (7) und einem Träger, an welchem die Frontplatte (7) angeordnet ist, **dadurch gekennzeichnet, dass** der Träger ein zumindest dreiseitiger Rahmen (10) ist, an dem die Frontplatte (7) angeordnet ist, und die Tür (6) eine an der Tür (6) angeordnete Justagevorrichtung (21) aufweist, mit welcher die Frontplatte (7) relativ zum Rahmen (10) in der Position verstellbar ist.

2. Tür (6) nach Anspruch 1, **dadurch gekennzeichnet, dass** die Frontplatte (7) durch die Justagevorrichtung (21) in horizontaler Richtung geradlinig verschiebbar ist und/oder um eine senkrecht zur Frontplatte (7) stehende Achse relativ zum Rahmen (10) verdrehbar ist.

3. Tür (6) nach Anspruch 1 oder 2, **dadurch gekennzeichnet, dass** die Justagevorrichtung (21) eine erste Justageschraube (29) aufweist, die mit ihrer Längsachse (B) parallel zur Frontplatte (7) orientiert ist und in einer horizontalen Richtung durch eine Schraubbewegung bewegbar ist.

4. Tür (6) nach Anspruch 3, **dadurch gekennzeichnet, dass** die erste Justageschraube (29) an dem Rahmen (10) angeordnet ist und mit einem Gewinde (32) an einem Schraubenstift (31) der ersten Justageschraube (29) mit einem Gegengewinde (33) eines ersten Koppelelements (17), welches an einer Rückseite (9) der Frontplatte (7) angeordnet ist, schraubgekoppelt ist.

5. Tür (6) nach Anspruch 4, **dadurch gekennzeichnet, dass** die erste Justageschraube (29) ohne direkte Gewindekopplung an dem Rahmen (10) gelagert ist.

6. Tür (6) nach Anspruch 5, **dadurch gekennzeichnet, dass** sich die erste Justageschraube (29) mit dem Schraubenstift (31) durch eine Durchführung (35) in einem senkrechten Rahmenteil (11) des Rahmens (10) erstreckt.

7. Tür (6) nach einem der Ansprüche 4 bis 6, **dadurch gekennzeichnet, dass** das erste Koppelelement (17) von der Rückseite (9) mit einem Plattenteil (17b) nach hinten absteht.

8. Tür (6) nach einem der vorhergehenden Ansprüche, **dadurch gekennzeichnet, dass** die Justagevorrichtung (21) eine zweite Justageschraube (20) aufweist, die mit ihrer Längsachse (A) parallel zur Frontplatte (7) orientiert ist und in einer horizontalen Richtung durch eine Schraubbewegung bewegbar ist.

9. Tür (6) nach Anspruch 8, **dadurch gekennzeichnet, dass** die zweite Justageschraube (20) an dem Rahmen (10) angeordnet ist und mit einem Gewinde (24) an einem Schraubenstift (23) der zweiten Justageschraube (20) mit einem Gegengewinde (36) im Rahmen (10) schraubgekoppelt ist.

10. Tür (6) nach Anspruch 8 oder 9, **dadurch gekennzeichnet, dass** ein Schraubenstift (23) der zweiten Justageschraube (20) an seinem vorderen Endbereich (25) eine Eingriffsnut (26) aufweist, in welche ein zweites Koppelelement (18), welches an einer Rückseite (9) der Frontplatte (7) angeordnet ist, eingreift.

11. Tür (6) nach Anspruch 10, **dadurch gekennzeichnet, dass** das zweite Koppelelement (18) ein von der Rückseite (9) nach hinten abstehendes Plattenteil (18b) aufweist, welches mit der Eingriffsnut (26) verbunden ist.

12. Tür (6) nach Anspruch 11, **dadurch gekennzeichnet, dass** das Plattenteil (18b) eine zu einem Rand (28) des Plattenteils (18b) offene Eingriffskulisse (27) aufweist, in welche der Schraubenstift (23) eintaucht, und ein Begrenzungsrand (27a) der Eingriffskulisse (27) in die Eingriffsnut (26) eingreift.

13. Tür (6) nach Anspruch 12, **dadurch gekennzeichnet, dass** die Eingriffskulisse (27) nicht-geradlinig, insbesondere L-förmig, ausgebildet ist.

14. Haushaltsgerät, insbesondere Gargerät (1), mit einem Gehäuse (2) und einer Tür (6) nach einem der vorhergehenden Ansprüche, welche an dem Gehäuse (2) bewegbar angeordnet ist.

15. Verfahren zur Justage einer Frontplatte (7) einer Tür (6) für ein Haushaltsgerät (1), **dadurch gekennzeichnet, dass** eine an einem als zumindest dreiseitigen Rahmen (10) ausgebildeten Träger der Tür (6) angeordnete Frontplatte (7) relativ zum Rahmen (10) positionell justiert wird, wobei die Justage mit einer an der Tür (6) angeordneten Justagevorrichtung (21) durchgeführt wird.
